# EUROPEAN PATENT SPECIFICATION

(11) **EP 2 884 302 B1**
(45) Date of publication and mention of the grant of the patent: **30.12.2020**
(21) Application number: 14194173.2
(22) Date of filing: 20.11.2014
(51) Int. Cl.: G01S 17/02, G01S 7/481, G01S 17/04

(54) **Photoelectric sensor**
Fotoelektrischer Sensor
Capteur photo-électrique

(30) Priority: 13.12.2013 JP 2013258669
(43) Date of publication of application: 17.06.2015
(73) Proprietor: OMRON CORPORATION, Kyoto, Kyoto 600-8530 (JP)
(72) Inventor: Murata, Kenji, Kyoto, Kyoto 600-8530 (JP); Shinohara, Taiki, Kyoto, Kyoto 600-8530 (JP)
(74) Representative: Horn Kleimann Waitzhofer Patentanwälte PartG mbB

(56) References cited:
- US-A1- 2003 107 721
- US-A1- 2004 079 871
- US-A1- 2011 182 071

## Description

### FIELD

The present invention relates to a photoelectric sensor that illuminates a target object with light and detects its reflected light.

### BACKGROUND

For example, Patent Literature 1 describes a photoelectric sensor incorporating an optional unit including a cylindrical lens that has a curvature only in a uniaxial direction. The photoelectric sensor moves its transmitter lens forward and backward along the optical axis of light emitted from a light emitter to adjust the spot diameter of a circular beam or to adjust the length of a line beam in the uniaxial direction.

The structure described in the above publication improves the degree of freedom in various settings of a light beam emitted from a long-distance photoelectric sensor.

US 2004/0079871 A1 describes a photoelectric sensor that includes a light projecting section projecting detection medium light to a detection object region, and a light receiving section receiving reflecting light or transmitted light from the detection object region.

US 2011/0182071 A1 describes a beam irradiation device that includes a semiconductor laser, a lens into which laser light emitted from the semiconductor laser is entered, and a scanning portion which causes the laser light transmitted through the lens to scan a targeted area.

US 2003/0107721 A1 describes an electronic distance meter that includes a sighting telescope optical system having an objective lens for sighting an object, and an optical distance meter which includes a light-transmitting optical system for transmitting a measuring light toward the object via the objective lens, and a light-receiving optical system for receiving a portion of the measuring light which is reflected by the object.

### CITATION LIST

### PATENT LITERATURE

Patent Literature 1: Japanese Unexamined Patent Application Publication No. 2004-71366

### SUMMARY

### TECHNICAL PROBLEM

However, the above structure known in the art has the problems described below.

With a light beam having a small beam diameter, the reflective photoelectric sensor described in the above publication can detect a target erroneously depending on the surface conditions, when the detection is affected by protrusions and recesses on the surface of the detection target. To prevent such erroneous detection, the photoelectric sensor uses a line beam and averages the light receiving amount.

However, the photoelectric sensor in actual use can fail to detect the target even with a line beam. To overcome this, the equipment installed in the actual site may include an additional photoelectric sensor, such as a transmissive photoelectric sensor or a retroreflective photoelectric sensor.

It is an object of the present invention to provide a light emitting unit that produces a line beam expanded in a longitudinal direction and also in a width direction to increase the detectable range and increase the coverage for averaging, and also to provide a photoelectric sensor including such a light emitting unit. The invention is defined in claim 1 which corresponds to a combination of the first, third and fifth aspect.

### SOLUTION TO PROBLEM

A reflective photoelectric sensor according to a first aspect illuminates light to a predetermined distance from the sensor and detects reflected light from a target located at that predetermined distance. The photoelectric sensor includes a light source, a diaphragm, and a lens. The diaphragm blocks a peripheral portion of light emitted from the light source. The lens converts light passing through the diaphragm to a substantially collimated light beam. The light beam has an oval cross-section having a ratio of a length of a long axis to a length of a short axis ranging from 2 to 10 inclusive at the predetermined distance. The predetermined distance may be, in particular, a nominal distance at which the target is estimated to be placed when the sensor is used. That is to say, the predetermined distance is within a detection range for which the sensor has been designed.

The sensor produces a line beam having an intended oval shape by combining the diaphragm, which blocks a peripheral portion of light emitted from the light source and limits the range of light to pass through, and the lens, which converts light passing through the diaphragm to a substantially collimated light beam.

The lengths of the long axis and the short axis of the oval cross-section may be determined by using, for example, the half width of the graph showing the wavelength distribution of laser beams emitted from the light source. The oval cross-section may not be in a complete oval shape, but may be in a substantially rectangular shape. The substantially collimated light beam may not be a completely collimated light beam, but may include a slightly diffusing light beam or a slightly focused light beam. Further, substantial collimation includes substantially collimating light that is focused or diffuses in at least a uniaxial direction perpendicular to the optical axis. The lens may not be a focus lens but may include a cylindrical lens that has a curvature in a predetermined first direction and has no curvature in a second direction perpendicular to the first direction.

This enables a target to be illuminated with a line beam having an intended size and having an oval cross-section and enables the dimensions of the line beam to be adjusted in the long axis direction and in the short axis direction. When this reflective photoelectric sensor is mounted on a photoelectric sensor, the photoelectric sensor can increase the detectable range and increase the coverage for averaging.

The reflective photoelectric sensor according to a second aspect is the reflective photoelectric sensor of the first aspect in which the light beam having an oval cross-section having a ratio of the long axis length to the short axis length ranging from 2 to 5 inclusive at the predetermined distance.

The more preferable range is specified for the ratio of the lengths of the long axis and the short axis of the light beam with which the target is illuminated.

This enables a target to be illuminated with a line beam having an intended size and having an oval cross-section and enables the dimensions of the line beam to be adjusted in the long axis direction and in the short axis direction.

The reflective photoelectric sensor according to a third aspect is the reflective photoelectric sensor of the first or second aspect in which the diaphragm has an opening with a different ratio of vertical and horizontal lengths, and the lens is configured to substantially collimate a light beam passing through the opening of the diaphragm.

The sensor produces a line beam having an intended oval shape by combining the diaphragm, which has the opening with a different ratio of vertical and horizontal lengths, and the lens, which produces substantially collimated light.

The optical axis is a straight line that is aligned with the center of the lens and is perpendicular to the lens surface.

The light beam passing through the diaphragm is shaped into an oval shape in conformance with the dimensions of the opening of the diaphragm, and is substantially collimated by the lens. This produces a light beam having an intended oval cross-section in conformance with the dimensions of the opening of the diaphragm.

The reflective photoelectric sensor according to a fourth aspect is the reflective photoelectric sensor of the first or second aspect in which the diaphragm has an opening with substantially equal vertical and horizontal lengths. The lens has a curvature only in a uniaxial direction in a plane perpendicular to an optical axis thereof, and is an asymmetric lens with respect to the optical axis configured to substantially collimate light that is focused or diffuses at least in the uniaxial direction perpendicular to the optical axis.

The sensor produces a line beam having an oval cross-section by combining the diaphragm, which has the opening with substantially the same ratio of vertical and horizontal lengths, and the asymmetric lens, which produces substantially collimated light.

The optical axis is a straight line that is aligned with the center of the lens and is perpendicular to the lens surface.

The light beam passing through the diaphragm is shaped into a substantially circular shape in conformance with the dimensions of the opening of the diaphragm, but is substantially collimated only in the first direction in a plane perpendicular to the optical axis. As a result, the light beam widens in the second direction perpendicular to the first direction at the plane perpendicular to the optical axis without being affected by the lens. This produces a light beam having an intended oval cross-section that is long in the second direction.

The reflective photoelectric sensor according to a fifth aspect is the reflective photoelectric sensor of one of the first to fourth aspects in which the lens includes a first lens that has a surface rotationally symmetrical about an optical axis thereof and is configured to focus light emitted from the light source, and a second lens that has a curvature only in a first direction in a plane perpendicular to incident light from the first lens and is flat and has no curvature in a second direction perpendicular to the first direction. The diaphragm is arranged such that a direction of the short axis is substantially parallel to the first direction of the second lens. The reflective photoelectric sensor further includes a driving mechanism configured to move the first lens forward or backward relative to the light source from a reference position that is away from a light emitting surface of the light source by a focal length of the first lens in an optical axis direction of light emitted from the light source.

The lens includes the first lens for focusing light and the second lens that has a curvature only in the first direction in the plane perpendicular to the optical axis. The diaphragm is arranged such that its short axis direction is substantially parallel to the first direction of the second lens. The driving mechanism adjusts the distance between the light source and the first lens.

The optical axis is a straight line that is aligned with the center of the lens and is perpendicular to the lens surface.

When the first lens is at the reference position set based on the focal length of the first lens, the lens has its focal point in the vicinity of the target both in the vertical direction and in the horizontal direction. A narrow light beam having a different ratio of the vertical and horizontal lengths passing through the diaphragm then slightly widens in the shorter length direction when passing through the second lens. The resulting beam has substantially the same ratio of the vertical and horizontal lengths. This produces a substantially circular spot beam for illuminating the target.

When, for example, the first lens is moved from the reference position toward the light emitting surface, or specifically when the distance between the first lens and the light emitting surface is reduced, the light passing through the first lens slightly widens and travels toward the second lens without being focused. The light passing through the second lens, which has slightly widened through the first lens, is slightly focused by the second lens only in the first direction in which the lens has a curvature. The light passing through the first and second lenses will undergo substantial canceling out of the effects by the first and second lenses in the first direction. The light affected solely by the shape of the diaphragm is emitted from the reflective photoelectric sensor. This enables the target to be illuminated with a line beam shaped in the same direction as the diaphragm.

When, for example, the first lens is moved from the reference position in the direction opposite to the light emitting surface, or specifically when the distance between the light emitting surface and the first lens is increased, the light passing through the first lens is focused more by the first lens than when the first lens is at the reference position, and travels toward the second lens. A narrow and long light beam having a different ratio of vertical and horizontal lengths passing through the diaphragm has the focal point moving to a position in front of the target as viewed from the first lens, and is affected by the second lens in the first direction and is further focused. The narrow and long beam passing through the diaphragm moves its focal point in the short axis direction (first direction), and widens in the first direction in which the second lens has a curvature. Although not affected by the second lens, the portion of the light in the long axis direction (second direction) passing through the diaphragm can be shortened because of the initial setting in which the first lens will have the focal point in the vicinity of the target when the distance between the first lens and the light emitting surface is increased. This produces a line beam resulting from rotating the shape of the diaphragm by 90 degrees.

The length of the line beam in the long axis direction can be adjusted in accordance with the distance by which the first lens is moved from the above reference position.

As described above, adjusting the distance between the light emitting surface of the light source and the first lens allows illumination with a substantially circular spot beam and a line beam having the lengths adjustable in the two perpendicular axis directions (first and second directions), without changing the direction in which the reflective photoelectric sensor is mounted or replacing the attachment.

The reflective photoelectric sensor according to a sixth aspect is the reflective photoelectric sensor of the fifth aspect in which when the first lens is at the reference position, the light source, the first lens, and the second lens are arranged such that the focal point near the target is in front of the target in the first direction and is behind the target in the second direction as viewed from the first lens.

When the first lens is at the reference position, the light source and the first and second lenses are arranged such that the focal point of the light passing through the first and second lenses is in front of the target in the first direction, and is behind the target in the second direction.

Moving the first lens forward and backward relative to the light source in the optical axis direction based on the reference position enables the laser beam to be adjusted into a spot beam, a line beam that is long in the first direction, and a line beam that is long in the second direction perpendicular to the first direction.

The reflective photoelectric sensor according to a seventh aspect is the reflective photoelectric sensor of the fifth or sixth aspect in which the driving mechanism moves the first lens in the optical axis direction of light emitted from the light source.

The driving mechanism moves the first lens to adjust the distance between the light source and the first lens.

Moving the first lens forward and backward in the optical axis direction based on the reference position allows selective emission of a spot beam, a horizontal long oval line beam, and a vertically long oval line beam.

The reflective photoelectric sensor according to an eighth aspect is the reflective photoelectric sensor of the fifth or sixth aspect in which the driving mechanism moves the first lens and the diaphragm in the optical axis direction of light emitted from the light source.

In this structure, the driving mechanism moves the diaphragm together with the first lens to adjust the distance between the light source and the first lens.

The distance between the first lens and the diaphragm is constant although the driving mechanism adjusts the distance between the light source and the first lens. This stabilizes the shape of the light beam passing through the diaphragm and the first lens.

The reflective photoelectric sensor according to a ninth aspect is the reflective photoelectric sensor of the eighth aspect further including a lens holder for holding the first lens. The lens holder includes the diaphragm arranged on a plane substantially perpendicular to the optical axis direction of light emitted from the light source.

In this structure, the diaphragm is arranged on the plane of the lens holding unit for holding the first lens substantially perpendicular to the optical axis direction.

The driving mechanism moves the lens holding unit in the optical axis direction to allow the first lens and the diaphragm to move integrally.

The reflective photoelectric sensor according to a tenth aspect is the reflective photoelectric sensor according to one of the fifth to ninth aspects in which the driving mechanism moves the light source in a direction of light emitted from the light source.

In this structure, the driving mechanism moves the light source to adjust the distance between the light source and the first lens.

Moving the light source forward and backward in the optical axis direction based on the reference position allows selective emission of a spot beam, a horizontally long oval line beam, and a vertically long oval line beam.

The reflective photoelectric sensor according to an eleventh aspect is the reflective photoelectric sensor of one of the fifth to tenth aspects further including an enclosure accommodating at least the light source, the first lens, and the diaphragm. The driving mechanism includes a rotating body exposed outside the enclosure, and a screw mechanism configured to move the first lens in the optical axis direction by rotating the rotating body.

In this structure, the driving mechanism rotates the rotating body exposed on the enclosure, which accommodates the light source, the first lens, and the diaphragm. As a result, the screw mechanism moves the first lens.

Simply rotating the rotating body arranged outside the enclosure adjusts the distance between the light source and the first lens. This easily allows emission of a laser beam having an intended shape.

The reflective photoelectric sensor according to a twelfth aspect is the reflective photoelectric sensor of one of the fifth to eleventh aspects in which the second lens is an aspheric toric lens.

In this structure, the aspheric toric lens is used as the second lens having a curvature only in the first direction.

This structure widens only the width of the laser beam in the short axis direction by using the second lens.

The reflective photoelectric sensor according to a thirteenth aspect is the reflective photoelectric sensor of the twelfth aspect in which the second lens is a cylindrical lens.

In this structure, the cylindrical lens is used as the aspheric toric lens (second lens) having a curvature only in the first direction.

This structure widens only the width of the laser beam in the short axis direction by using the cylindrical lens as the second lens.

### ADVANTAGEOUS EFFECTS

The light emitting unit of the present invention is capable of illuminating a target with a line beam having an intended size and having an oval cross-section, and is capable of adjusting the dimensions of the line beam in the long axis direction and in the short axis direction.

### BRIEF DESCRIPTION OF THE DRAWINGS

Fig. 1 is an overall perspective view showing the structure of a photoelectric sensor according to one embodiment of the present invention.
Figs. 2A, 2B, and 2C are a side view, a front view, and a back view of the photoelectric sensor shown in Fig. 1.
Fig. 3 is a perspective view showing the structure of a body of the photoelectric sensor shown in Fig. 1.
Figs. 4A and 4B are perspective views showing the structure of an attachment to be mounted on the body of the photoelectric sensor shown in Fig. 1.
Fig. 5 is a cross-sectional view taken along line A-A in Fig. 2B.
Fig. 6 is a perspective view showing the structure of a lens holder for holding a transmitter lens included in the light emitting unit shown in Fig. 5.
Fig. 7 is a diagram showing the vertical to horizontal ratio of a diaghram arranged in the lens holder shown in Fig. 6.
Fig. 8 is a cross-sectional view showing the main components of a driving mechanism in the photoelectric sensor of Fig. 5.
Figs. 9A and 9B are schematic views describing the structure for emitting an oval line beam from the photoelectric sensor of Fig. 1.
Fig. 10A is a diagram showing the beam shape formed when the transmitter lens included in the photoelectric sensor of Fig. 1 is arranged at a reference position, and Figs. 10B and 10C are schematic views of the corresponding arrangements of the sensor components in X-direction and Y-direction.
Fig. 11A is a diagram showing the beam shape formed when the transmitter lens included in the photoelectric sensor of Fig. 1 has moved toward a laser diode (LD) from the reference position, and Figs. 11B and 11C are schematic views showing the corresponding arrangements of the sensor components in X-direction and Y-direction.
Fig. 12A is a diagram showing the beam shape formed when the transmitter lens included in the photoelectric sensor of Fig. 1 has moved away from the LD from the reference position, and Figs. 12B and 12C are schematic views showing the corresponding arrangements of the sensor components in X-direction and Y-direction.
Figs. 13A and 13B are schematic views showing the structure for emitting an oval line beam from a photoelectric sensor according to another embodiment
Fig. 14A is a diagram showing the beam shape formed when an LD arranged in a photoelectric sensor including a light emitting unit of the other embodiment has moved toward a transmitter lens from a reference position, and Figs. 14B and 14C are schematic views showing the corresponding arrangements of the sensor components in X-direction and Y-direction.
Fig. 15A is a diagram showing the beam shape formed when the LD arranged in the photoelectric sensor including the light emitting unit according to the other embodiment has moved away from the transmitter lens from the reference position, and Fig. 15B and 15C are schematic views showing the corresponding arrangements of the sensor components in X-direction and Y-direction.

### DETAILED DESCRIPTION

Embodiments will now be described with reference to the drawings. To avoid redundancy and to facilitate understanding of persons skilled in the art, for example, matters known in the art may not be described in detail and components that are substantially the same as the components described may not be described.

The following description and the accompanying drawings are provided by the applicant to enable persons skilled in the art to fully understand the contents of the present invention, and are not intended to limit the subject matter claimed.

### First Embodiment

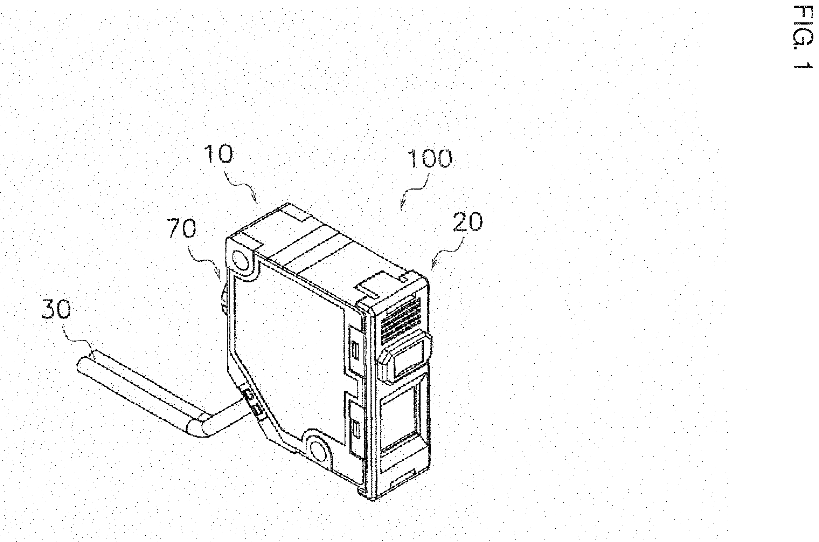

A photoelectric sensor 100 according to one embodiment of the present invention will now be described with reference to Figs. 1 to Fig. 12C.

In the description below, the direction being forward or backward refers to the direction determined by assuming that the surface onto which a laser beam is applied from the photoelectric sensor 100 is the front surface. The direction being upward or downward and the direction being vertical is the direction along the long axis of a front surface 11 of the photoelectric sensor 100. The direction to the left or to the right or being horizontal is the forward or backward direction and the direction orthogonal to the long axis direction.

### Overall Structure of the Photoelectric Sensor 100

The photoelectric sensor 100 according to the present embodiment is a reflective photoelectric sensor that receives reflected light of its emitted light and detects the presence of a detection target (target) S and other information. The photoelectric sensor 100 is used as, for example, a photoelectric switch, an optical distance determination sensor, or an optical displacement sensor. As shown in Fig. 1, the photoelectric sensor 100 includes a body 10, an attachment 20, and a cord 30.

### Body 10

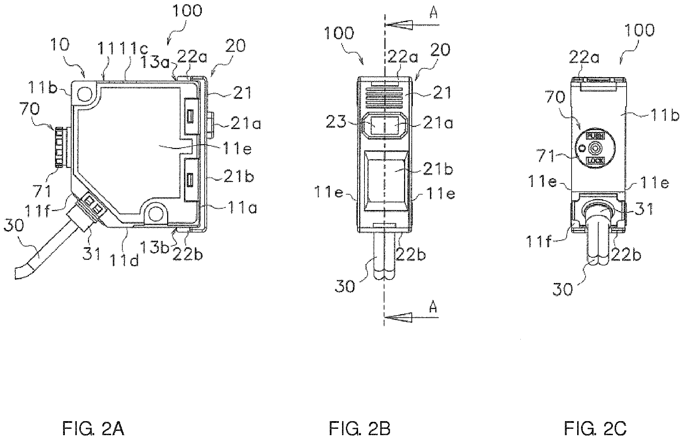

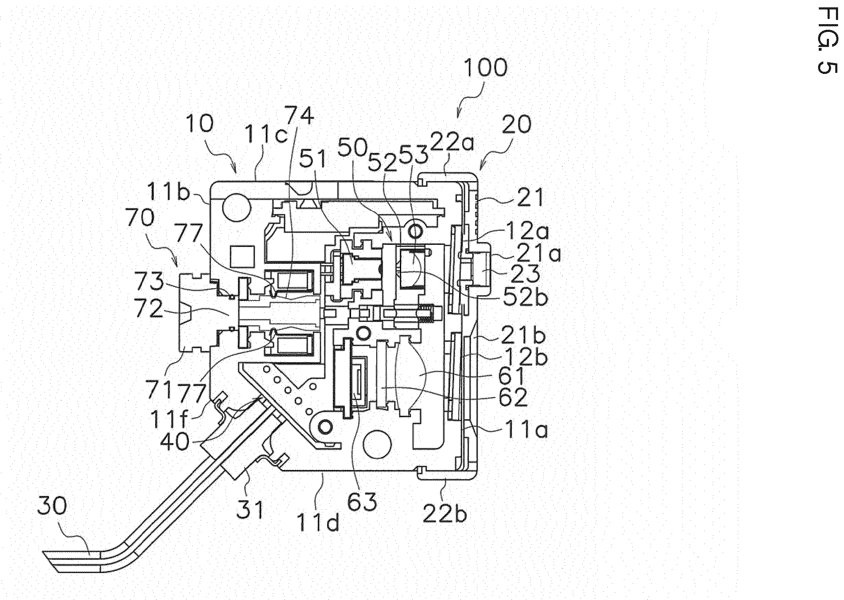

The body 10 includes a connecting portion 40, a light emitting unit 50, a light receiving unit 60, and a driving mechanism 70 (described below) (all refer to Fig. 5) as its internal components. As shown in Figs. 2A to 2C, the body 10 further includes an enclosure 11, and a light emitting window 12a and a light receiving window 12b. An attachment 20 is mounted on the body 10 at a front surface 11a of the enclosure 11 in which the light emitting window 12a and the light receiving window 12b are formed.

The enclosure 11 is a boxlike member defining the contour of the body 10. The enclosure 11 includes seven surfaces, that is, the front surface 11a, a back surface 11b, an upper surface 11c, a lower surface 11d, two side surfaces 11e and 11e, and an inclined surface 11f.

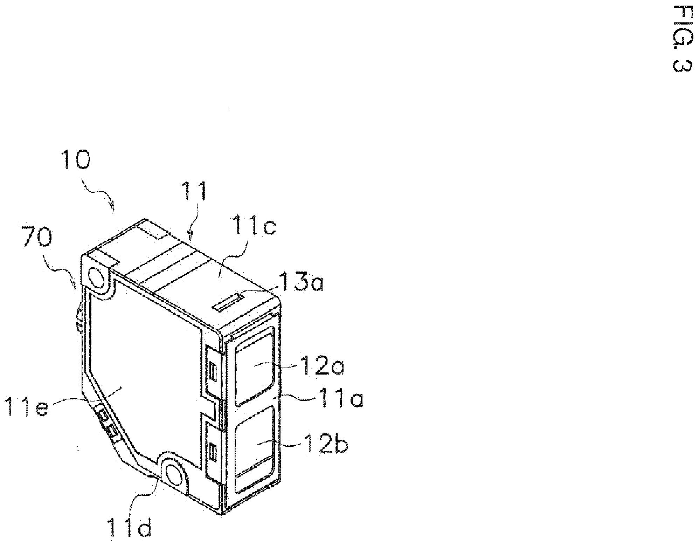

The front surface 11a is the surface from which light is emitted toward the detection target S, which is located at a predetermined distance from the photoelectric sensor 100, and at which the reflected light is received. As shown in Fig. 2A and other figures, the attachment 20 is mounted on the front surface 11a. As shown in Fig. 3, the front surface 11a includes the light emitting window 12a for emitting light and the light receiving window 12b for receiving the emitted light and guiding it into the enclosure 11, which are arranged in the long axis direction (vertical direction in the figure).

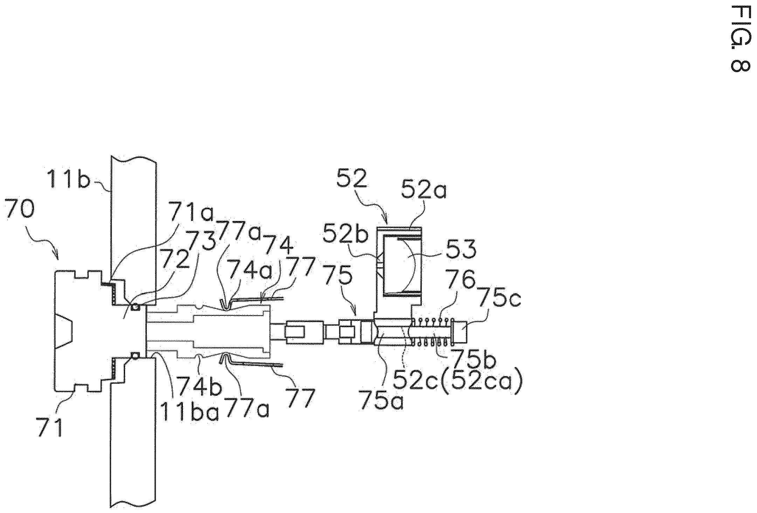

As shown in Figs. 2A and 2C, the back surface 11b is opposite to the front surface 11a for emitting and receiving light. An operational part 71, which is used to operate the driving mechanism 70 (described below), is arranged on the back surface 11b. The back surface 11b further has a through-hole 11ba (refer to Fig. 8), in which a rotational axis 72 of the operational part 71 is inserted.

The upper surface 11c joins the upper end of the front surface 11a and the upper end of the back surface 11b, and defines the ceiling of the enclosure 11. As shown in Fig. 2A and Fig. 3, the upper surface 11c includes, at a position near the front surface 11a, an engagement groove 13a, which is engaged with an engagement portion 22aa of a catch portion 22a of the attachment 20.

The lower surface 11d is opposite to the upper surface 11c. The lower surface 11d joins the lower end of the front surface 11a and the lower end of the back surface 11b, and defines the bottom of the enclosure 11. As shown in Fig. 2A, the lower surface 11d includes, at a position near the front surface 11a, an engagement groove 13b, which is engaged with an engagement portion 22ba of a catch portion 22b of the attachment 20.

The two side surfaces 11e are substantially trapezoidal flat portions defining the sides of the body 10.

The inclined surface 11f, which is arranged below the back surface 11b, is inclined relative to the back surface 11b and to the lower surface 11d. A cord holder 31 of a cord 30 is fixed to the inclined surface 11f.

The light emitting window 12a allows light from the light emitting unit 50 (described below) (refer to Fig. 5) arranged in the enclosure 11 to be emitted out of the sensor. The surface of the light emitting window 12a is inclined relative to the optical axis of the emitted light to prevent reflected light of the light that has been emitted out of the sensor from entering the light emitting window 12a.

The light receiving window 12b receives the reflected light of the light that has been emitted from the light emitting window 12a, and guides the received light to the light receiving unit 60 (refer to Fig. 5), which is arranged in the enclosure 11.

The internal components of the body 10 will be described below in detail.

### Attachment 20

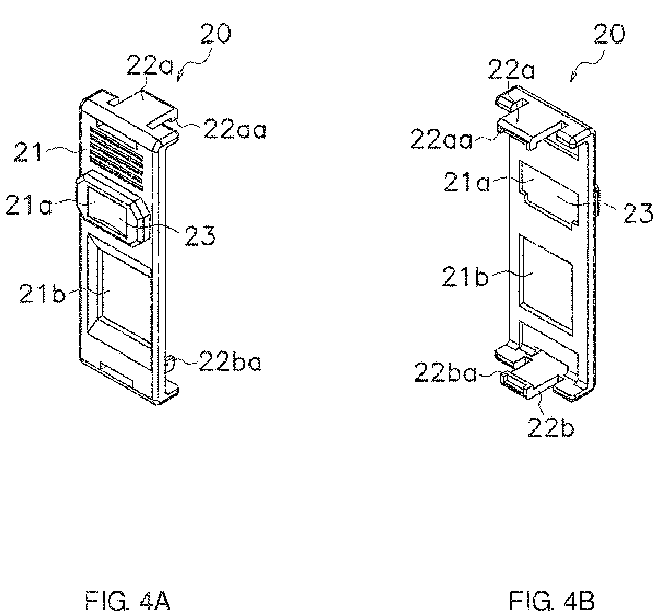

The attachment 20 is capable of focusing the light emitted through the light emitting window 12a of the body 10 only in a uniaxial direction that is the horizontal direction. The attachment 20 is mounted on the front surface 11a of the body 10. As shown in Figs. 4A and 4B, the attachment 20 includes a flat portion 21, catch portions 22a and 22b, and a cylindrical lens (a second lens, or an aspheric toric lens) 23.

The flat portion 21 is a flat member arranged in proximity of and along the front surface 11a of the body 10 when the attachment 20 is mounted on the body 10. As shown in Figs. 4A and 4B, the flat portion 21 includes a light emitting portion 21a and an opening 21b.

As shown in Fig. 4A, the light emitting portion 21a is arranged in the upper half of the flat portion 21. The light emitting portion 21a is placed in front of the light emitting window 12a of the body 10 when the attachment 20 is mounted on the body 10. The cylindrical lens 23 is attached to the light emitting portion 21a. Light emitted through the light emitting window 12a of the body 10 is emitted out of the sensor after passing through the cylindrical lens 23, which is attached to the light emitting portion 21a.

As shown in Fig. 4A, the opening 21b is formed in the lower half of the flat portion 21. The opening 21b is placed in front of the light receiving window 12b of the body 10 when the attachment 20 is mounted on the body 10. The opening 21b is a through-hole formed through the surface of the flat portion 21. Reflected light of the light emitted through the light emitting window 12a of the body 10 passes through the opening 21b and enters the body 10 through the light receiving window 12b.

As shown in Figs. 4A and Fig. 4B, the catch portions 22a and 22b are elastic members for mounting the attachment 20 onto the body 10. The catch portions 22a and 22b are arranged to protrude perpendicularly from the upper end and the lower end of the flat portion 21. The catch portions 22a and 22b include engagement portions 22aa and 22ba at the distal ends of their flat portions that are parallel to the upper surface 11c and the lower surface 11d of the body 10 when the attachment 20 is mounted on the body 10.

As shown in Fig. 4B, the engagement portions 22aa and 22ba protrude downward and upward from the flat portions of the catch portions 22a and 22b. When the attachment 20 is mounted on the body 10, the catch portions 22a and 22b of the engagement portions 22aa and 22ba deform elastically and move along the upper surface 11c and the lower surface 11d, and are engaged with the engagement grooves 13a and 13b at their mounting positions as shown in Fig. 5. This fixes the attachment 20 on the body 10.

As shown in Figs. 4A and 4B, the cylindrical lens 23, which is attached to the light emitting portion 21a, has a curvature only in a uniaxial direction on the surface vertical to the optical axis. In the present embodiment, the cylindrical lens 23 is attached to the flat portion 21 to focus light in the horizontal direction.

### Cord 30

The cord 30 is connected to an amplifier (not shown) and the photoelectric sensor 100 (body 10). In detail, as shown in Fig. 5, the cord 30 is connected to the connecting portion 40 arranged in the body 10 with the cord holder 31.

This structure allows a drive voltage provided from the amplifier and various signals transmitted between the amplifier and the photoelectric sensor 100 to be transmitted and received with the cord 30.

### Connecting Portion 40

As shown in Fig. 5, the connecting portion 40 is arranged at a lower position on the back surface 11b within the enclosure 11 of the body 10 The connecting portion 40 comes in contact with a plurality of terminals arranged on the cord holder 31 to electrically connect the cord 30 and the body 10.

As a result, the amplifier (not shown) and the photoelectric sensor 100 electrically connect to each other with the cord 30, allowing a drive voltage to be provided to the photoelectric sensor 100 and a detection signal from the photoelectric sensor 100 to be received by the amplifier, which can then determine the presence of the detection target S and other information.

### Light Emitting Unit 50

The light emitting unit 50 emits light toward the detection target S. As shown in Fig. 5, the light emitting unit 50 is arranged behind the light emitting window 12a of the enclosure 11 of the body 10. The light emitting unit 50 includes a laser diode (LD) (light source) 51, a lens holder (lens holding unit) 52, a transmitter lens (first lens) 53.

The LD 51, which is a light source for emitting laser light having a predetermined wavelength, is arranged most downstream in the optical axis direction of the light emitting unit 50. In detail, as shown in Fig. 5, the LD 51 is arranged at a position slightly nearer the upper surface 11c in the middle of the enclosure 11 of the body 10. In the present embodiment, the LD 51 is fixed inside the body 10.

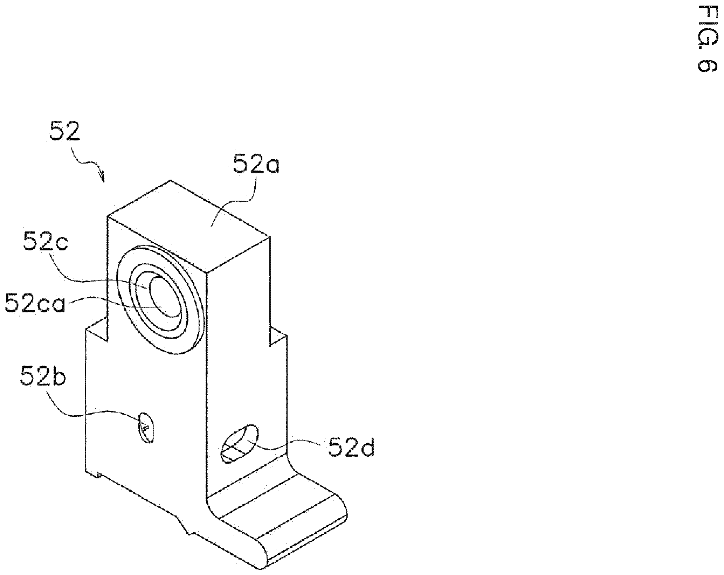

The lens holder 52 is arranged to hold the transmitter lens 53. The lens holder 52 moves forward and backward in the optical axis direction integrally with the transmitter lens 53 when driven by the driving mechanism 70 (described below). As shown in Fig. 6, the lens holder 52 includes a body 52a, a diaphragm 52b, a shaft-receiving hole 52c, and an opening 52d.

The body 52a is a boxlike member, which accommodates the transmitter lens 53.

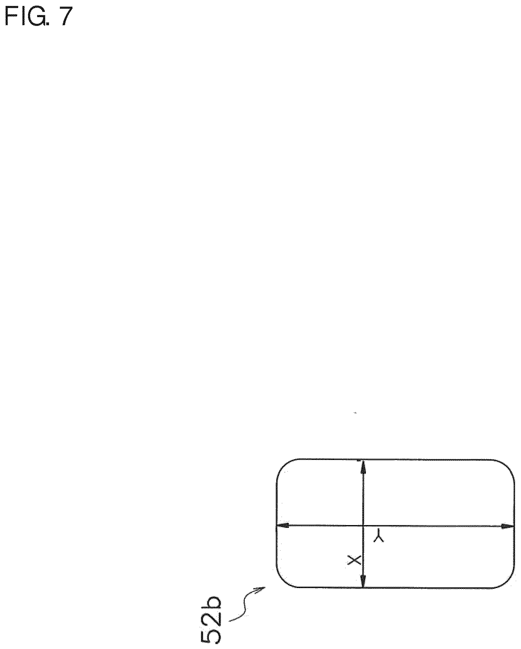

The diaphragm 52b is an opening formed in the body 52a at the position of the optical axis. The diaphragm 52b is arranged adjacent to the transmitter lens 53 attached to the body 52a in the optical axis direction. As shown in Fig. 6, the diaphragm 52b is an opening having a different vertical to horizontal ratio. The diaphragm 52b limits the passage of the laser light emitted from the LD 51. In detail, as shown in Fig. 7, the diaphragm 52b has the ratio of its length in Y-direction (long axis direction) to its length in X-direction (short axis direction) ranging from 2 to 10. The laser beam emitted from the LD 51 is shaped through this diaphragm 52b into a vertical long laser beam, which then enters the transmitter lens 53.

The ratio of the length in Y-direction to the length in X-direction is more preferably in the range of 2 to 5.

The shaft-receiving hole 52c receives a shaft 75 of the driving mechanism 70 (described below) inserted through the hole. The shaft-receiving hole 52c has, on its inner circumferential surface, a screw portion (screw mechanism) 52ca (refer to Fig. 6), which is screwed with a screw portion (screw mechanism) 75a of the shaft 75 (refer to Fig. 8).

To fix the transmitter lens 53 arranged inside the body 52a, adhesive is applied into the opening 52d.

The transmitter lens 53 is a symmetrical lens with respect to the optical axis, and has a surface that is rotationally symmetrical about the optical axis. The transmitter lens 53 is fixed in the body 52a with adhesive applied into the opening 52d. As shown in Fig. 5, the transmitter lens 53 is arranged adjacent to the diaphragm 52b in the lens holder 52. The transmitter lens 53 focuses light passing through the diaphragm 52b, and guides the light in the direction of the light emitting window 12a and the cylindrical lens 23.

In the present embodiment, the transmitter lens 53 moves forward and backward in the optical axis direction together with the diaphragm 52b when driven by the driving mechanism 70 (described below). This adjusts the distance between the transmitter lens 53 and the LD 51 and changes the shape of the laser beam. The changing shape of the laser beam emitted from the photoelectric sensor 100 when the transmitter lens 53 is moved in the optical axis direction will be described in detail below.

### Light Receiving Unit 60

The light receiving unit 60 receives reflected light of the laser light emitted from the light emitting unit 50 toward the detection target S, and detects the amount of the reflected light. As shown in Fig. 5, the light receiving unit 60 includes a receiver lens 61, a filter 62, and a light receiving element 63.

The receiver lens 61 is arranged in proximity of and behind the light receiving window 12b to focus reflected light of the laser light emitted from the light emitting unit 50 onto the detection target S, and to guide the light onto the light receiving element 63.

The filter 62 removes an unnecessary portion of the laser light that has passed through the receiver lens 61 to improve the integrity of the reflected light detected by the light receiving element 63 and to improve the measurement accuracy.

The light receiving element 63 receives the reflected light that has passed through the receiver lens 61 and the filter 62, and outputs a light receiving signal generated in accordance with the received amount of the reflected light. The light receiving signal is transmitted to an amplifier (not shown) via the connecting portion 40 and the cord 30. As a result, the amplifier can determine the presence of the detection target S and other information based on, for example, the level of the light receiving signal.

### Driving Mechanism 70

As shown in Fig. 5, the driving mechanism 70 is arranged inside the body 10 to extend in the optical axis direction from the back surface 11b. The driving mechanism 70 adjusts the distance between the LD 51 and the transmitter lens 53 described above in the optical axis direction by moving the transmitter lens 53. More specifically, the driving mechanism 70 moves the transmitter lens 53 forward and backward relative to the LD 51 on the optical path, with a reference position P0 being the position of the transmitter lens 53 at which the distance between the transmitter lens 53 and the LD 51 is substantially the same as the focal length of the transmitter lens 53. As shown in Fig. 8, the driving mechanism 70 includes the operational part (rotating body) 71, the rotational axis 72, a ring 73, a slidable portion 74, the shaft 75, a coil spring 76, and two flat springs 77.

The operational part 71 is a cylindrical portion exposed on the back surface 11 of the body 10b. When the operational part 71 is retracted in the back surface 11b of the body 10 (refer to Fig. 5 and other figures), its gear 71a is engaged with a gear (not shown) arranged on the back surface 11b to restrict rotation (in a locked state). This restricts rotation of the operational part 71 and fixes the position of the transmitter lens 53.

When the operational part 71 is protruded from the back surface 11b of the body 10 (refer to Fig. 8), the operational part 71 is rotatable clockwise and counterclockwise (in an adjustable state). Rotating the protruded operational part 71 moves the lens holder 52, to which the transmitter lens 53 is attached, forward and backward in the optical axis direction.

The rotational axis 72 is a cylindrical portion about which the operational part 71 rotates. As shown in Fig. 8, the rotational axis 72 connects the operational part 71, which is exposed on the back surface 11b of the body 10, to the slidable portion 74.

As shown in Fig. 8, the ring 73 is an O-ring made of rubber, which is set on the outer circumference of the rotational axis 72. The ring 73 seals the gap between the through-hole 11ba formed in the back surface 11b of the body 10 and the outer circumferential surface of the rotational axis 72 to prevent foreign matter or water from entering from the back surface 11b.

The slidable portion 74 is a cylindrical portion formed integrally with the operational part 71 and the rotational axis 72. As shown in Fig. 8, the end of the slidable portion 74 nearer the back surface 11b is connected to the rotational axis 72. The slidable portion 74 includes a recess 74a in the middle in the long axis direction. The recess 74a is a portion gradually thinner from the two ends of the slidable portion 74 toward the middle. The slidable portion 74 further has a groove 74b at a position nearer the back surface 11b from the recess 74a. The groove 74b extends along the outer circumferential surface of the cylindrical slidable portion.

In the recess 74a and the groove 74b extending along the outer circumferential surface of the slidable portion 74, two bent portions 77a, which are at the distal ends of the flat springs 77, move in cooperation with the protruding or retracting operation of the operational part 71.

The shaft 75 is connected to the end of the slidable portion 74 nearer the front surface 11a in a manner incapable of relative rotation. In this structure, a rotating torque generated by the rotating operational part 71 is transmitted to the shaft 75 in a reliable manner through the rotational axis 72 and the slidable portion 74. The shaft 75 includes a large-diameter portion 75c at its end nearer the front surface 11a. The shaft 75 further includes a small-diameter portion 75b at a position nearer the back surface 11b than the large-diameter portion 75c. The small-diameter portion 75b is placed into the shaft-receiving hole 52c of the lens holder 52 and then into an area defined by the inner circumference of the coil spring 76. The small-diameter portion 75b of the shaft 75 further includes the screw portion 75a (refer to Fig. 8).

The screw portion 75a is screwed with the screw portion 52ca formed at the shaft-receiving hole 52c of the lens holder 52 (refer to Fig. 6). Rotating the shaft 75 moves the lens holder 52 in the optical axis direction. When the operational part 71 is protruded and is in the adjustable state, rotating the operational part 71, which is connected to the shaft 75, moves the lens holder 52 forward and backward in the optical axis direction. More specifically, rotating the operational part 71 clockwise or counterclockwise adjusts the distance between the LD 51 fixed in the body 10 and the transmitter lens 53.

The coil spring 76 is mounted on the outer circumference of the small-diameter portion 75b of the shaft 75 including the screw portion 75a. The coil spring 76 is sandwiched between the large-diameter portion 75c, which is an end of the shaft 75 nearer the front surface 11a and the surface of the lens holder 52 nearer the front surface 11a. As a result, the coil spring 76 constantly presses the lens holder 52 toward the back surface 11b. The pressing force applied by the coil spring 76 reduces rattle between the screw portion 52ca of the lens holder 52 and the screw portion 75a of the shaft 75 that are screwed together. This structure stabilizes the arrangement of the diaphragm 52b and the transmitter lens 53, through which the laser light emitted from the LD 51 passes.

As shown in Fig. 5, the two flat springs 77 are fixed inside the enclosure 11, with the slidable portion 74 being sandwiched between the upper and lower flat springs 77 in cross-section. Portions of the flat springs 77 (bent portions 77a) come in contact with the outer circumference of the slidable portion 74. In detail, the flat springs 77 apply a pressing force pressing the slidable portion 74 from above and from below in the radial direction of the cylindrical slidable portion 74. The two flat springs 77 include the bent portions 77a on their ends coming in contact with the slidable portion 74. When the operational part 71 is retracted or protruded in and from the back surface 11b of the body 10, the slidable portion 74 moves in the direction of the rotational axis 72, with the bent portions 77a coming in contact with the recess 74a or the groove 74b on the outer circumferential surface of the slidable portion 74 and applying a pressing force in the radial direction to the slidable portion 74.

As shown in Fig. 5, when the operational part 71 is retracted in the back surface 11b of the body 10 in the locked state, the slidable portion 74 moves toward the front surface 11a of the body 10. As a result, the two bent portions 77a on the distal ends of the flat springs 77 are engaged in the recess 74a of the slidable portion 74.

As shown in Fig. 8, when the operational part 71 is protruded from the back surface 11b of the body 10 in the adjustable state, the slidable portion 74 moves toward the back surface 11b of the body 10. As a result, the two bent portions 77a on the distal ends of the flat springs 77 are engaged in the groove 74b of the slidable portion 74. This engagement of the bent portions 77a into the groove 74b provides a tactile response to the operator. This structure enables the operator receiving the tactile response to determine that the operational part 71 has entered the locked state in which the rotation is restricted, and further maintains the locked state.

When the operational part 71 is protruded to unlock the locked state, the slidable portion 74 is engaged into the recess 74a to allow the operator to determine that the operational part 71 has entered the adjustable state. When the slidable portion 74 is moved along the shaft 75, the bent portions 77a slide on the recess 74a while applying a pressing force in the radial direction. This stabilizes the bent portions 77a on the narrowest part of the recess 74a. This structure prevents the operational part 71 from being held at an unstable position between the locked state and the adjustable state and from being operated erroneously.

In the operation of protruding the operational part 71, the bent portions 77a are disengaged from the groove 74b, and move in contact with the surface that is inclined downward from the back surface 11b toward the front surface 11a, among the two inclined surfaces defining the recess 74a of the slidable portion 74. In cooperation with this protruding operation, the two flat springs 77 press the slidable portion 74 toward the back surface 11b, assisting the protruding operation of the operational part 71.

### Illumination with Line Beam Having Oval Cross-section

The photoelectric sensor 100 having the above-described structure according to the present embodiment enables illumination with a line beam having an intended oval shape when the attachment 20 has been removed from the photoelectric sensor 100 (refer to Fig. 3).

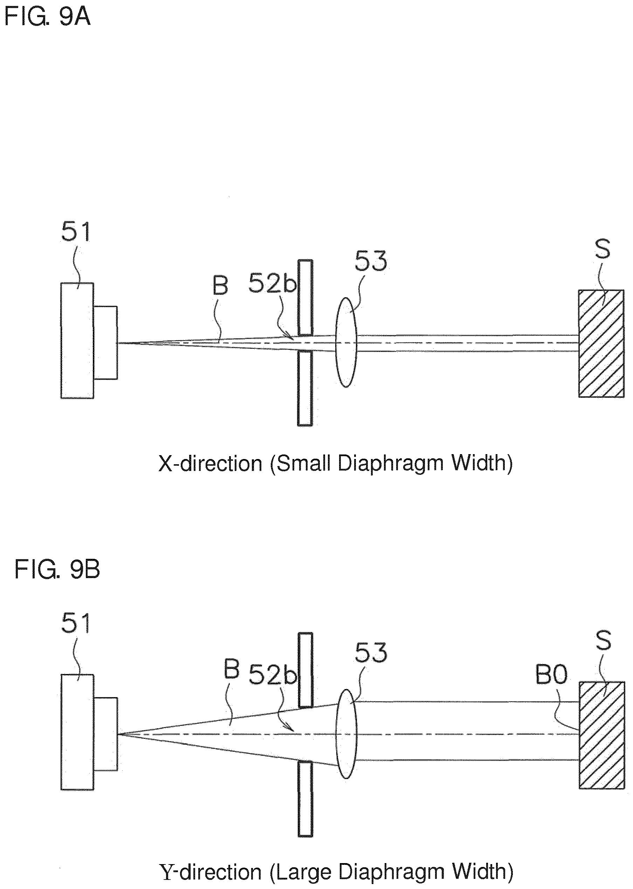

More specifically, as shown in Figs. 9A and 9B, the photoelectric sensor 100 combines the diaphragm 52b, which has a smaller width in X-direction and a larger width in Y-direction than in X-direction, and the transmitter lens 53, which is a symmetrical lens with respect to the optical axis, to produce a line beam having an intended oval shape.

More specifically, as shown in Fig. 9A, a laser beam B emitted from the LD 51 in X-direction passes through the opening of the diaphragm 52b, and then substantially collimated by the transmitter lens 53 and is applied to the detection target S. When the distance between the diaphragm 52b and the transmitter lens 53 is small, the length of the laser beam in X-direction applied to the detection target S is substantially the same as the dimension of the opening of the diaphragm 52b in X-direction.

As shown in Fig. 9B, the laser beam B emitted from the LD 51 in Y-direction passes through the opening of the diaphragm 52b, and then is substantially collimated by the transmitter lens 53 and applied to the detection target S. When the distance between the diaphragm 52b and the transmitter lens 53 is small, the length of the laser beam B in Y-direction applied to the detection target S is substantially the same as the dimension of the opening of the diaphragm 52b in Y-direction.

Thus, the laser beam B applied to the detection target S is shaped into an oval beam that is longer in Y-direction than in X-direction, in conformance with the dimensions of the diaphragm 52b. This enables illumination of the target with the line beam having an intended oval cross-section. As a result, the photoelectric sensor 100 increases the detectable range and increases the coverage for averaging.

### Adjusting Laser Beam Shape

The photoelectric sensor 100 according to the present embodiment enables illumination with a line beam having an oval shape as described above. Additionally, the photoelectric sensor 100 enables switching of the laser beam applied to the detection target (target) S between different beams including a vertically long beam, a horizontally long beam, and a circular spot by adjusting the distance between the LD 51 and the transmitter lens 53 using the driving mechanism 70.

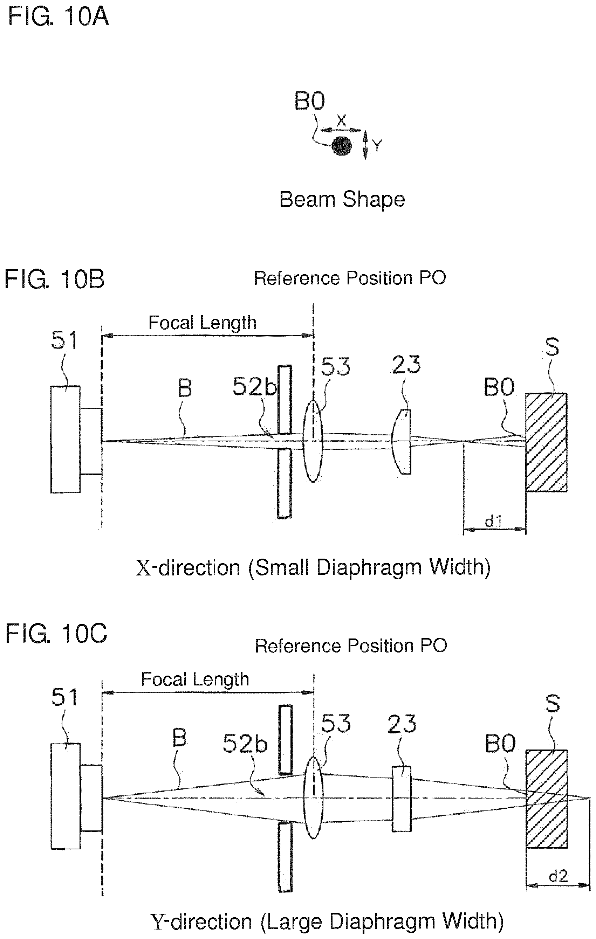

The operation for shaping the laser beam B emitted from the photoelectric sensor 100 into a spot beam B0, a vertically long line beam B2, and a horizontally long line beam B2 will now be described with reference to Figs. 10A to Fig. 12C.

In the photoelectric sensor 100 according to the present embodiment, as described above, the laser beam emitted from the LD 51 passes through the transmitter lens 53 and then passes through the diaphragm 52b having a vertically long opening that is longer in Y-direction (vertical direction) than in X-direction (horizontal direction). The laser beam immediately before passing through the cylindrical lens 23 of the attachment 20 is shaped into a vertically long beam having dimensions being affected by the dimensions of the diaphragm 52b. The cylindrical lens 23 has a curvature only in X-direction corresponding to the short axis direction of the diaphragm 52b. Assuming these conditions, the operation of producing laser beams with the different shapes will now be described.

### Spot Beam B0

The photoelectric sensor 100 according to the present embodiment produces a laser beam having substantially the same length in X-direction and in Y-direction by adjusting the distance between the LD 51 and the transmitter lens 53, and emits the spot beam B0 shown in Fig. 10A.

More specifically, as shown in Figs. 10B and 10C, when the transmitter lens 53 is at a reference position P0, which is away from the light emitting surface of the LD 51 by the focal length of the transmitter lens 53, the laser beam B passing through the diaphragm 52b, which is substantially rectangular and longer in Y-direction than in X-direction, is substantially collimated by the transmitter lens 53.

The diaphragm 52b has a smaller width in X-direction. The light beam passing through the transmitter lens 53 thus has a smaller width in this direction. The diaphragm 52b has a larger width in Y-direction than in X-direction. The light beam passing through the transmitter lens 53 thus has a larger width in Y-direction than in X-direction.

The laser beam B passing through the transmitter lens 53 is subsequently focused by the curved surface of the cylindrical lens 23 having a curvature in X-direction. The laser beam B is focused, with the focal point being placed in front of the detection target S as viewed from the transmitter lens 53, and is applied to the surface of the detection target S.

The laser beam B passing through the transmitter lens 53 subsequently passes through the cylindrical lens 23 without being affected by the cylindrical lens 23 that has no curvature in Y-direction. The laser beam B is focused, with the focal point being placed behind the detection target S as viewed from the transmitter lens 53, and is applied to the surface of the detection target S.

The distance d1 from the surface of the detection target S to the focal point in X-direction is substantially the same as the distance d2 from the surface of the detection target S to the focal point in Y-direction.

As a result, the surface of the detection target S is illuminated with the light beam having substantially the same width in X-direction and in Y-direction. When the transmitter lens 53 is arranged at the reference position P0 relative to the LD 51 as shown in Figs. 10B and 10C, the photoelectric sensor produces the spot beam B0 having a substantially circular shape shown in Fig. 10A.

### Vertically Long Line Beam B1

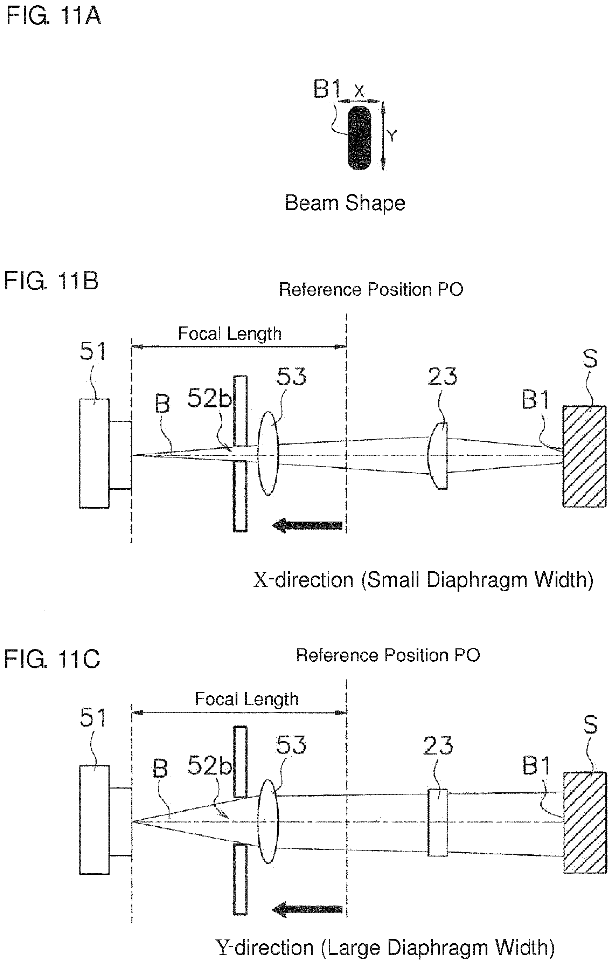

The photoelectric sensor 100 according to the present embodiment can produce a vertically long laser beam that is short in X-direction and long in Y-direction by adjusting the distance between the LD 51 and the transmitter lens 53, and emits the vertically long line beam B1 shown in Fig. 11A.

More specifically, as shown in Figs. 11B and 11C, when the transmitter lens 53 is moved toward the LD 51 from the reference position P0, which is away from the light emitting surface of the LD 51 by the focal length of the transmitter lens 53, the laser beam B passing thorough the substantially rectangular diaphragm 52b that is longer in Y-direction than in X-direction is substantially collimated while widening slightly through the transmitter lens 53.

The diaphragm 52b has a smaller width in X-direction. The light beam passing through the transmitter lens 53 thus has a smaller width in this direction. The diaphragm 52b has a larger width in Y-direction than in X-direction. The light beam passing through the transmitter lens 53 thus has a larger width in Y-direction than in X-direction.

The laser beam B passing through the transmitter lens 53 is subsequently focused by the curved surface of the cylindrical lens 23 having a curvature in X-direction, and is applied to the surface of the detection target S.

The laser beam B passing through the transmitter lens 53 subsequently passes through the cylindrical lens 23 without being affected by the cylindrical lens 23 that has no curvature in X-direction. The laser beam B is then applied to the surface of the detection target S while the width of the light beam is remaining large.

As a result, the vertically long line beam B1 that is narrower in X-direction and wider in Y-direction is applied to the surface of the detection target S. When the transmitter lens 53 is moved toward the LD 51 from the reference position P0 as shown in Figs. 11B and 11C, the photoelectric sensor produces the vertically long line beam B1 shown in Fig. 11A having the dimensions in conformance with the diaphragm 52b.

The vertically long line beam B1 shown in Fig. 11A can have dimensions in X-direction and Y-direction that are changeable by adjusting the distance at which the transmitter lens 53 is arranged relative to the LD 51.

### Horizontally Long Line Beam B2

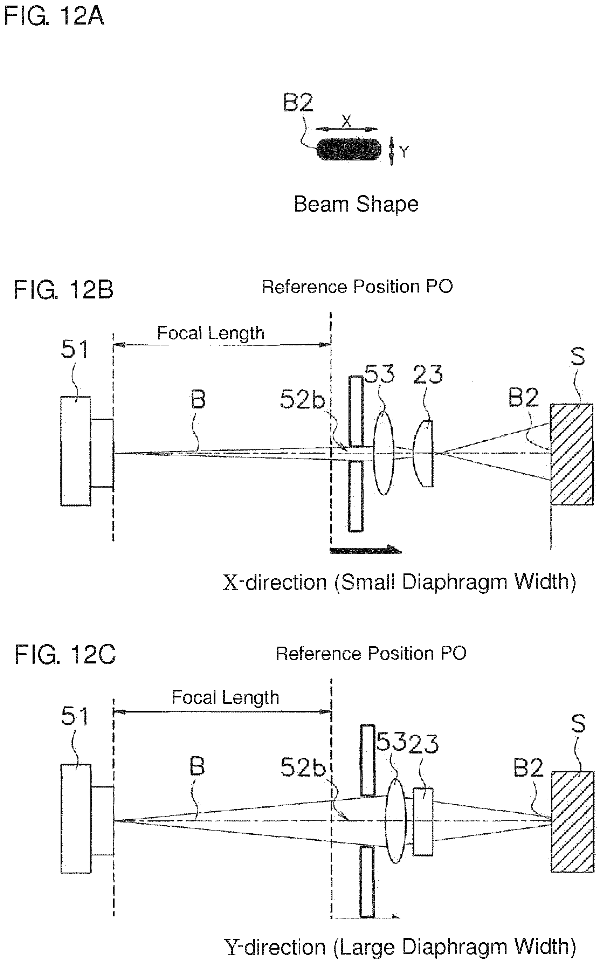

The photoelectric sensor 100 according to the present embodiment can produce a horizontally long laser beam that is long in X-direction and short in Y-direction by adjusting the distance between the LD 51 and the transmitter lens 53, and emits the horizontally long line beam B2 shown in Fig. 12A.

More specifically, as shown in Figs. 12B and 12C, when the transmitter lens 53 is moved away from the LD 51 from the reference position P0, which is away from the light emitting surface of the LD 51 by the focal length of the transmitter lens 53, the laser beam B passing through the substantially rectangular diaphragm 52b that is longer in Y-direction than in X-direction enters the cylindrical lens 23 while being focused by the transmitter lens 53.

The diaphragm 52b has a smaller width in X-direction. The light beam passing through the transmitter lens 53 thus has a smaller width in this direction. The diaphragm 52b has a larger width in Y-direction than in X-direction. The light beam passing through the transmitter lens 53 thus has a larger width in Y-direction than in X-direction.

The laser beam B passing through the transmitter lens 53 is subsequently focused by the curved surface of the cylindrical lens 23 having a curvature in X-direction. As a result, the laser beam B forms the focal point in front of the detection target S as viewed from the transmitter lens 53, and is applied to the surface of the detection target S while the width of the light beam is remaining large.

The laser beam B passing through the transmitter lens 53 subsequently passes through the cylindrical lens 23 without being affected by the cylindrical lens 23 that has no curvature in Y-direction. The laser beam B is applied to the surface of the detection target S while being focused by the transmitter lens 53 and being narrower.

As a result, the horizontally long line beam B2 that is wider in X-direction and narrower in Y-direction is applied to the surface of the detection target S. When the transmitter lens 53 is moved away from the reference position P0 from the LD 51 as shown in Figs. 12B and 12C, the photoelectric sensor produces the horizontally long line beam B2 shown in Fig. 12A having the dimensions resulting from rotating the diaphragm 52b by 90 degrees.

The vertically long line beam B1 shown in Fig. 12A can have dimensions in X-direction and Y-direction that are changeable by adjusting the distance at which the transmitter lens 53 is arranged relative to the LD 51.

### Other Embodiments

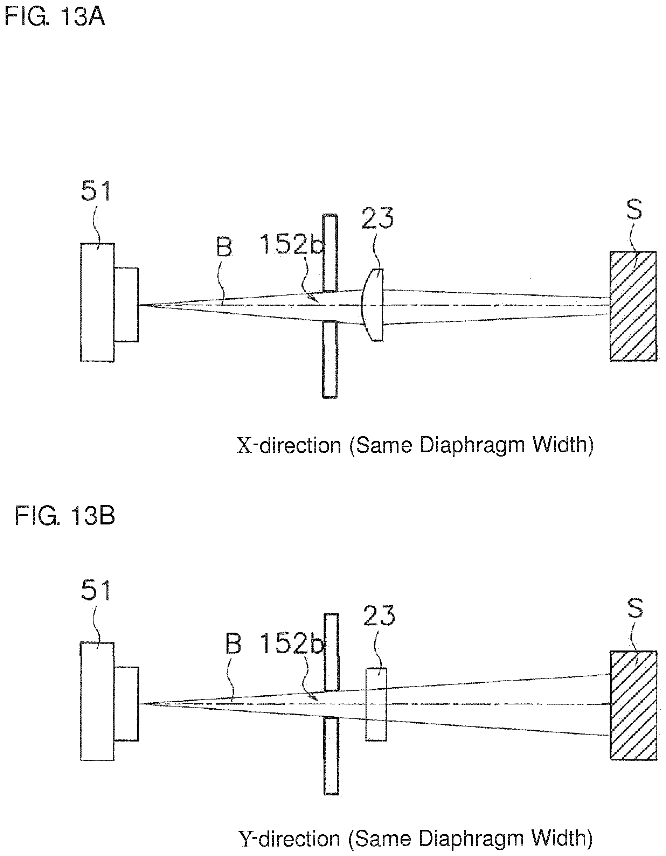

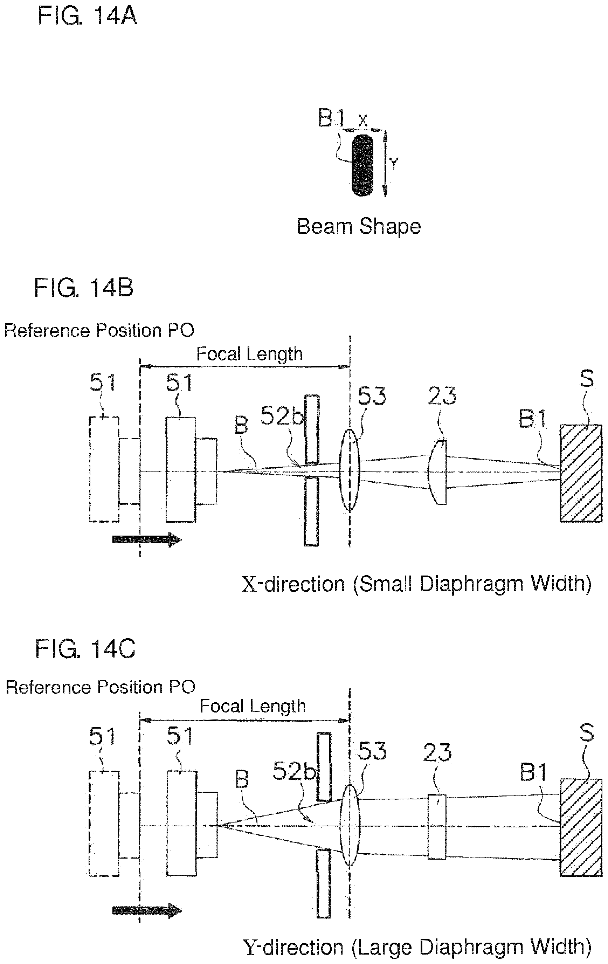

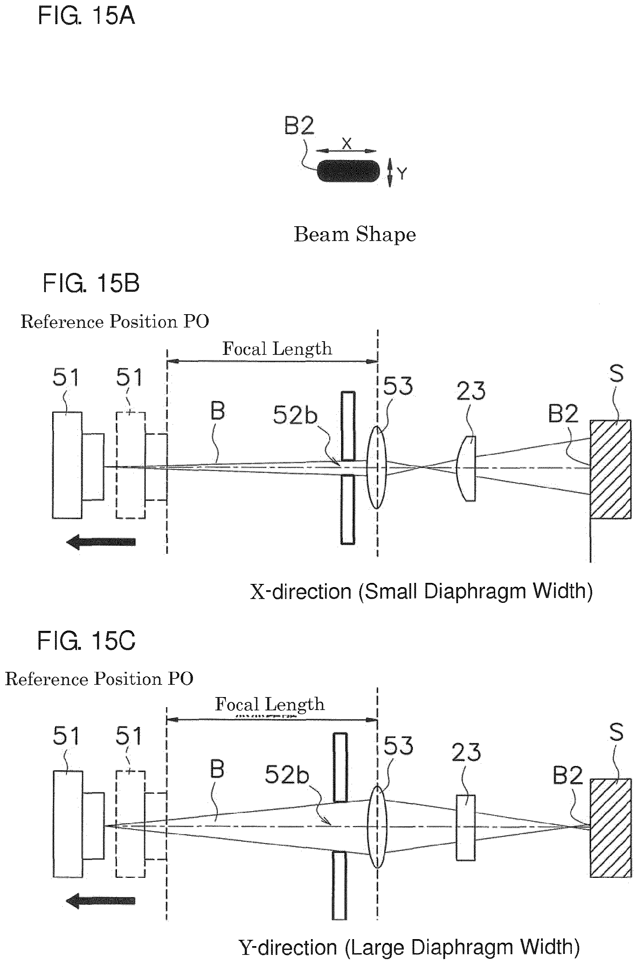

(A) In the above embodiment, the photoelectric sensor 100 includes the driving mechanism 70 that adjusts the distance between the LD (light source) 51 and the transmitter lens 53 to change the shape of the laser beam.
   For example, the photoelectric sensor may have a simple structure shown in Figs. 9A and 9B without including the attachment (cylindrical lens) and the driving mechanism when the sensor can produce an oval line beam by combining a diaphragm with intended dimensions and a lens of an appropriate type.
   Although the simple structure shown in Figs. 9A and 9B includes a diaphragm having an opening with different vertical and horizontal dimensions and a focusing lens (first lens). For example, the structure may include a diaphragm 152b having an opening with substantially the same vertical and horizontal dimensions and an asymmetric lens 123 with respect to the optical axis (cylindrical lens) as shown in Figs. 13A and 13B.
   In this structure, the diaphragm 152b has a substantially rectangular opening or a substantially circular opening.
   The laser beam having substantially the same length in X-direction and in Y-direction is focused by the cylindrical lens 123 only in one predetermined direction (in X-direction in the example of Fig. 13A) to produce a line beam with an intended oval shape.
(B) To change the shape of the laser beam B emitted from the photoelectric sensor 100 in the above embodiment, the transmitter lens 53 is moved forward and backward along the optical path in the enclosure 11 to change the distance between the LD 51 and the transmitter lens 53.
   For example, as shown in Fig. 14A to 15C, the transmitter lens 53 may be fixed and the LD 51 may be moved forward and backward along the optical path.
   More specifically, to produce a vertically long line beam B1 that is longer in Y-direction (vertical direction) than in X-direction (horizontal direction) as shown in Fig. 14A, the LD 51 may be moved forward from the reference position P0 toward the transmitter lens 53 (to the right in the figure) as shown in Figs. 14B and 14C.
   To produce a horizontally long laser beam B2 that is longer in X-direction than in Y-direction as shown in Fig. 15A, the LD 51 may be moved backward from the reference position P0 toward the transmitter lens 53 (to the left in the figure) as shown in Figs. 15B and 15C.
   More specifically, the structures according to embodiments can produce the advantages described above when the structures can adjust the distance between the LD 51 functioning as the light source and the transmitter lens 53 functioning as the first lens based on the reference position set at the focal length of the lens.
   The mechanism for moving the light source may be the same as the driving mechanism 70 described in the above embodiment.
(C) In the above embodiment, the cylindrical lens 23 is arranged in the attachment 20.
   For example, the LD (light source) 51, the transmitter lens (first lens) 53, the cylindrical lens (second lens) 23, the diaphragm 52b, and the driving mechanism 70 forming the light emitting unit of the present invention may be integrally arranged in a single package.
(D) In the above embodiment, the vertically long diaphragm 52b that is longer in Y-direction (vertical direction) than in X-direction (horizontal direction) is used to limit a part of the optical path of the laser beam B emitted from the LD 51.
   For example, the diaphragm may be horizontally long, or is longer in X-direction than in Y-direction, to limit a part of the optical path of the laser beam B emitted from the LD 51.
   In this case, the cylindrical lens (aspheric toric lens) having a curvature only in a uniaxial direction needs to be rotated by 90 degrees in accordance with the diaphragm rotated by 90 degrees. To produce the advantages the diaphragm and the cylindrical lens are arranged to align the short axis direction of the diaphragm with the direction of the surface of the cylindrical lens having a curvature.
   This arrangement enables the photoelectric sensor to produce both a horizontally long laser beam that is long in X-direction and a vertically long laser beam that is long in Y-direction by adjusting the distance between the LD and the transmitter lens based on the reference position in the same manner as described above.
(E) In the above embodiment, the shape of the opening of the diaphragm 52b is substantially rectangular.
   For example, the opening of the diaphragm may be substantially circular or substantially oval.
(F) In the above embodiment, the transmitter lens 53 is mounted on the lens holder 52 having the diaphragm 52b, and the diaphragm 52b and the transmitter lens 53 move integrally.
   For example, the diaphragm may be fixed and the transmitter lens may move independently.
   However, as described in the above embodiment, the shape of the light passing through the diaphragm can be maintained when the distance between the diaphragm and the transmitter lens is fixed. It is thus preferable that the diaphragm and the transmitter lens move integrally as in the above embodiment.
(G) In the above embodiment, the convex cylindrical lens 23 is used as an example of the aspheric toric lens that has a curvature only in a uniaxial direction.
   For example, a concave aspheric toric lens may be used instead of the convex cylindrical lens.
   Such a lens also has a curvature only in a uniaxial direction, and thus produces the same advantages as described in the above embodiment.
(H) In the above embodiment, the LD (laser diode) 51 is used as the light source.
   For example, a light emitting diode (LED) may be used as the light source instead of the LD.
(I) In the above embodiment, the light emitting unit 50 is mounted on the retroreflective photoelectric sensor 100.
   For example, the light emitting unit may be used for a photoelectric sensor other than the reflective photoelectric sensor. For example, the light emitting unit may be used for a diffuse-reflective photoelectric sensor and a definite-reflective photoelectric sensor.
(J) In the above embodiment, the photoelectric sensor 100 is not coaxial and includes the light emitting window 12a (light emitting unit 50) and the light receiving window 12b (light receiving unit 60) separately arranged in the vertical direction.

For example, the light emitting unit may be used for a coaxial photoelectric sensor in which a single window functions commonly as the light emitting window and the light receiving window.

### Industrial Applicability

The photoelectric sensor of the present invention can freely adjust the long axis direction of a line beam or the length of a line beam without changing the direction in which the unit is mounted or without replacing the attachment for producing a line beam. The present invention is thus applicable not only to photoelectric sensors but is also applicable to various other apparatuses including light emitting apparatuses and laser machining apparatuses.

### REFERENCE SIGNS LIST

- 10: body
- 11: enclosure
- 11a: front surface
- 11b: back surface
- 11ba: through-hole
- 11c: upper surface
- 11d: lower surface
- 11e: side surface
- 11f: inclined surface
- 12a: light emitting window
- 12b: light receiving window
- 13a,13b: engagement groove
- 20: attachment
- 21: flat portion
- 21a: light emitting portion
- 21b: opening
- 22a, 22b: catch portion
- 22aa, 22ba: engagement portion
- 23: cylindrical lens (lens, second lens, aspheric toric lens)
- 30: cord
- 31: cord holder
- 40: connecting portion
- 50: light emitting unit
- 51: LD (laser diode) (light source)
- 52: lens holder (lens holding unit)
- 52a: body
- 52b: diaphragm
- 52c: shaft-receiving hole
- 52ca: screw portion (screw mechanism)
- 52d: opening
- 53: transmitter lens (lens, first lens)
- 60: light receiving unit
- 61: receiver lens
- 62: filter
- 63: light receiving element
- 70: driving mechanism
- 71: operational part (rotating body)
- 71a: gear
- 72: rotational axis
- 73: ring
- 74: slidable portion
- 74a: recess
- 74b: groove
- 75: shaft
- 75a: screw portion (screw mechanism)
- 75b: small-diameter portion
- 75c: large-diameter portion
- 76: coil spring
- 77: flat spring
- 77a: bent portion
- 100: photoelectric sensor
- 123: cylindrical lens (lens)
- 152b: diaphragm
- B: laser beam
- B0: spot beam
- B1: vertically long line beam
- B2: horizontally long line beam
- d1,d2: distance
- S: detection target (target)

## Claims

1. A reflective photoelectric sensor (100) that is configured to illuminate light to a predetermined distance from the sensor and to detect reflected light from a target (S) when the target (S) is located at that predetermined distance, the photoelectric sensor (100) comprising:
a light source (51);
a diaphragm (52b; 152b) configured to block a peripheral portion of light emitted from the light source (51), the diaphragm (52b; 152b) having an opening with different vertical and horizontal lengths; and
a lens (53; 123) configured to convert light passing through the diaphragm (52b; 152b) to a substantially collimated light beam,
wherein the light beam has an oval cross-section having a ratio of a length of a long axis to a length of a short axis ranging from 2 to 10 inclusive at the predetermined distance,
wherein the lens (53; 123) includes a first lens (53) that has a surface rotationally symmetrical about an optical axis thereof and is configured to focus light emitted from the light source (51), and a second lens (23) that has a curvature only in a first direction in a plane perpendicular to incident light from the first lens (53) and has no curvature in a second direction perpendicular to the first direction,
wherein the diaphragm (52b; 152b) is arranged such that a direction of its short axis is substantially parallel to the first direction of the second lens (23), and
wherein the reflective photoelectric sensor (100) further comprises a driving mechanism (70) configured to move the first lens (53) forward or backward relative to the light source (51) from a reference position that is away from a light emitting surface of the light source (51) by a focal length of the first lens (53) in an optical axis direction of light emitted from the light source (51).

2. The reflective photoelectric sensor (100) according to claim 1, wherein the light beam having an oval cross-section has the ratio of the long axis length to the short axis length ranging from 2 to 5 inclusive at the predetermined distance.

3. The reflective photoelectric sensor (100) according to one of claims 1 and 2, wherein
the lens (53; 123) is configured to substantially collimate a light beam passing through the opening of the diaphragm (52b; 152b).

4. The reflective photoelectric sensor (100) according to claim 1, wherein when the first lens (53) is at the reference position, the light source (51), the first lens (53), and the second lens (23) are arranged such that a focal point near the target (S) is in front of the target (S) in the first direction and is behind the target (S) in the second direction as viewed from the first lens (53).

5. The reflective photoelectric sensor (100) according to one of claims 1 to 4, wherein
the driving mechanism (70) moves the first lens (53) in the optical axis direction of light emitted from the light source (51).

6. The reflective photoelectric sensor (100) according to one of claims 1 to 4, wherein
the driving mechanism (70) moves the first lens (53) and the diaphragm (52b; 152b) in the optical axis direction of light emitted from the light source (51).

7. The reflective photoelectric sensor (100) according to claim 6, further comprising:
a lens holder (52) for holding the first lens (53), wherein the lens holder (52) includes the diaphragm (52b; 152b) arranged on a plane substantially perpendicular to the optical axis direction of light emitted from the light source (51).

8. The reflective photoelectric sensor (100) according to one of claims 1 to 4, wherein the driving mechanism (70) moves the light source (51) in a direction of light emitted from the light source (51).

9. The reflective photoelectric sensor (100) according to one of claims 1 to 8, further comprising:
an enclosure (11) accommodating at least the light source (51), the first lens (53), and the diaphragm (52b; 152b),
wherein the driving mechanism (70) includes a rotating body (71) exposed outside the enclosure (11), and a screw mechanism (75a) configured to move the first lens (53) in the optical axis direction by rotating the rotating body (71).

10. The reflective photoelectric sensor (100) according to one of claims 1 to 9, wherein
the second lens (23) is an aspheric toric lens.

11. The reflective photoelectric sensor (100) according to claim 10, wherein
the second lens (23) is a cylindrical lens.

## Patentansprüche

1. Reflektierender fotoelektrischer Sensor (100), der geeignet ist, Licht bis zu einem vorbestimmten Abstand von dem Sensor zu beleuchten und reflektiertes Licht von einem Ziel (S) zu erfassen, wenn sich das Ziel (S) in diesem vorbestimmten Abstand befindet, wobei der fotoelektrische Sensor (100) umfasst:
eine Lichtquelle (51);
eine Blende (52b; 152b), die geeignet ist, einen Umfangsabschnitt des von der Lichtquelle (51) emittierten Lichts zu blockieren, wobei die Blende (52b; 152b) eine Öffnung mit unterschiedlichen vertikalen und horizontalen Längen aufweist; und
eine Linse (53; 123), die geeignet ist, das durch die Blende (52b; 152b) hindurchtretende Licht in einen im Wesentlichen kollimierten Lichtstrahl umzuwandeln,
wobei der Lichtstrahl einen ovalen Querschnitt mit einem Verhältnis einer Länge einer langen Achse zu einer Länge einer kurzen Achse im Bereich von einschließlich 2 bis 10 in dem vorbestimmten Abstand aufweist,
wobei die Linse (53; 123) eine erste Linse (53), die eine um ihre optische Achse rotationssymmetrische Oberfläche aufweist und geeignet ist, von der Lichtquelle (51) emittiertes Licht zu fokussieren, und eine zweite Linse (23), die lediglich in einer ersten Richtung in einer Ebene senkrecht zu einfallendem Licht von der ersten Linse (53) eine Krümmung aufweist und in einer zweiten Richtung senkrecht zu der ersten Richtung keine Krümmung aufweist, umfasst,
wobei die Blende (52b; 152b) so angeordnet ist, dass eine Richtung ihrer kurzen Achse im Wesentlichen parallel zu der ersten Richtung der zweiten Linse (23) ist, und
wobei der reflektierende fotoelektrische Sensor (100) ferner einen Antriebsmechanismus (70) umfasst, der geeignet ist, die erste Linse (53) vorwärts oder rückwärts relativ zur Lichtquelle (51) von einer Referenzposition, die von einer lichtemittierenden Oberfläche der Lichtquelle (51) um eine Brennweite der ersten Linse (53) entfernt ist, in eine Richtung der optischen Achse des von der Lichtquelle (51) emittierten Lichts zu bewegen.

2. Reflektierender fotoelektrischer Sensor (100) nach Anspruch 1, wobei das Verhältnis der Länge der langen Achse zur Länge der kurzen Achse des Lichtstrahls mit einem ovalen Querschnitt im Bereich von einschließlich 2 bis 5 in dem vorbestimmten Abstand liegt.

3. Reflektierender fotoelektrischer Sensor (100) nach einem der Ansprüche 1 und 2, wobei
die Linse (53; 123) geeignet ist, einen durch die Öffnung der Blende (52b; 152b) hindurchtretenden Lichtstrahl im Wesentlichen zu kollimieren.

4. Reflektierender fotoelektrischer Sensor (100) nach Anspruch 1, wobei, wenn sich die erste Linse (53) in der Referenzposition befindet, die Lichtquelle (51), die erste Linse (53) und die zweite Linse (23) so angeordnet sind, dass ein Brennpunkt nah am Ziel (S) vor dem Ziel (S) in der ersten Richtung und hinter dem Ziel (S) in der zweiten Richtung, von der ersten Linse (53) aus gesehen, liegt.

5. Reflektierender fotoelektrischer Sensor (100) nach einem der Ansprüche 1 bis 4, wobei
der Antriebsmechanismus (70) die erste Linse (53) in der Richtung der optischen Achse des von der Lichtquelle (51) emittierten Lichts bewegt.

6. Reflektierender fotoelektrischer Sensor (100) nach einem der Ansprüche 1 bis 4, wobei
der Antriebsmechanismus (70) die erste Linse (53) und die Blende (52b; 152b) in Richtung der optischen Achse des von der Lichtquelle (51) emittierten Lichts bewegt.

7. Reflektierender fotoelektrischer Sensor (100) nach Anspruch 6, ferner umfassend:
einen Linsenhalter (52) zum Halten der ersten Linse (53), wobei der Linsenhalter (52) die Blende (52b; 152b), die in einer Ebene angeordnet ist, die im Wesentlichen senkrecht zur Richtung der optischen Achse des von der Lichtquelle (51) emittierten Lichts verläuft, umfasst.

8. Reflektierender fotoelektrischer Sensor (100) nach einem der Ansprüche 1 bis 4, wobei der Antriebsmechanismus (70) die Lichtquelle (51) in einer Richtung des von der Lichtquelle (51) emittierten Lichts bewegt.

9. Reflektierender fotoelektrischer Sensor (100) nach einem der Ansprüche 1 bis 8, ferner umfassend:
ein Gehäuse (11), das mindestens die Lichtquelle (51), die erste Linse (53) und die Blende (52b; 152b) aufnimmt,
wobei der Antriebsmechanismus (70) einen Drehkörper (71), der außerhalb des Gehäuses (11) freiliegt, und einen Schraubmechanismus (75a) umfasst, der geeignet ist, die erste Linse (53) durch Drehen des Drehkörpers (71) in Richtung der optischen Achse zu bewegen.

10. Reflektierender fotoelektrischer Sensor (100) nach einem der Ansprüche 1 bis 9, wobei
die zweite Linse (23) eine asphärische torische Linse ist.

11. Reflektierender fotoelektrischer Sensor (100) nach Anspruch 10, wobei
die zweite Linse (23) eine Zylinderlinse ist.

## Revendications

1. Capteur photoélectrique réfléchissant (100) qui est configuré pour éclairer une lumière à une distance prédéterminée du capteur et pour détecter la lumière réfléchie par une cible (S) lorsque la cible (S) est située à cette distance prédéterminée, le capteur photoélectrique (100) comprenant :
une source de lumière (51) ;
un diaphragme (52b ; 152b) configuré pour bloquer une partie périphérique de la lumière émise par la source de lumière (51), le diaphragme (52b ; 152b) ayant une ouverture avec des longueurs verticales et horizontales différentes ; et
une lentille (53 ; 123) configurée pour convertir la lumière passant à travers le diaphragme (52b ; 152b) en un faisceau lumineux sensiblement collimaté,
dans lequel le faisceau lumineux a une section transversale ovale ayant un rapport d'une longueur d'un axe long à une longueur d'un axe court allant de 2 à 10 inclus à la distance prédéterminée,
dans lequel la lentille (53 ; 123) comprend une première lentille (53) qui a une surface symétrique en rotation autour d'un axe optique de celle-ci et est configurée pour focaliser la lumière émise par la source de lumière (51), et une seconde lentille (23) qui a une courbure seulement dans une première direction dans un plan perpendiculaire à la lumière incidente de la première lentille (53) et n'a pas de courbure dans une seconde direction perpendiculaire à la première direction,
dans lequel le diaphragme (52b ; 152b) est disposé de telle sorte qu'une direction de son axe court est sensiblement parallèle à la première direction de la deuxième lentille (23), et
dans lequel le capteur photoélectrique réfléchissant (100) comprend en outre un mécanisme d'entraînement (70) configuré pour déplacer la première lentille (53) vers l'avant ou vers l'arrière par rapport à la source de lumière (51) à partir d'une position de référence qui est éloignée d'une surface d'émission de lumière de la source de lumière (51) d'une longueur focale de la première lentille (53) dans une direction d'axe optique de la lumière émise par la source de lumière (51).

2. Capteur photoélectrique réfléchissant (100) selon la revendication 1, dans lequel le faisceau lumineux ayant une section transversale ovale a le rapport de la longueur de l'axe long à la longueur de l'axe court compris entre 2 et 5 inclus à la distance prédéterminée.

3. Capteur photoélectrique réfléchissant (100) selon l'une des revendications 1 et 2, dans lequel
la lentille (53 ; 123) est configurée pour collimater sensiblement un faisceau lumineux passant à travers l'ouverture du diaphragme (52b ; 152b).

4. Capteur photoélectrique réfléchissant (100) selon la revendication 1, dans lequel, lorsque la première lentille (53) est à la position de référence, la source de lumière (51), la première lentille (53) et la seconde lentille (23) sont disposées de telle sorte qu'un point focal proche de la cible (S) est devant la cible (S) dans la première direction et est derrière la cible (S) dans la seconde direction, vu depuis la première lentille (53).

5. Capteur photoélectrique réfléchissant (100) selon l'une des revendications 1 à 4, dans lequel
le mécanisme d'entraînement (70) déplace la première lentille (53) dans la direction de l'axe optique de la lumière émise par la source lumineuse (51).

6. Capteur photoélectrique réfléchissant (100) selon l'une des revendications 1 à 4, dans lequel
le mécanisme d'entraînement (70) déplace la première lentille (53) et le diaphragme (52b ; 152b) dans la direction de l'axe optique de la lumière émise par la source lumineuse (51).

7. Capteur photoélectrique réfléchissant (100) selon la revendication 6, comprenant en outre :
un porte-lentille (52) pour maintenir la première lentille (53), dans lequel le porte-lentille (52) comprend le diaphragme (52b ; 152b) disposé sur un plan sensiblement perpendiculaire à la direction de l'axe optique de la lumière émise par la source de lumière (51).

8. Capteur photoélectrique réfléchissant (100) selon l'une des revendications 1 à 4, dans lequel le mécanisme d'entraînement (70) déplace la source de lumière (51) dans une direction de la lumière émise par la source de lumière (51).

9. Capteur photoélectrique réfléchissant (100) selon l'une des revendications 1 à 8, comprenant en outre :
un boîtier (11) contenant au moins la source de lumière (51), la première lentille (53) et le diaphragme (52b ; 152b),
dans lequel le mécanisme d'entraînement (70) comprend un corps rotatif (71) exposé à l'extérieur du boîtier (11), et un mécanisme à vis (75a) configuré pour déplacer la première lentille (53) dans la direction de l'axe optique en faisant tourner le corps rotatif (71).

10. Capteur photoélectrique réfléchissant (100) selon l'une des revendications 1 à 9, dans lequel
la deuxième lentille (23) est une lentille torique asphérique.

11. Capteur photoélectrique réfléchissant (100) selon la revendication 10, dans lequel
la deuxième lentille (23) est une lentille cylindrique.
